# EUROPÄISCHE PATENTSCHRIFT

(11) **EP 4 423 401 B1**
(45) Veröffentlichungstag und Bekanntmachung des Hinweises auf die Patenterteilung: **10.12.2025**
(21) Anmeldenummer: 22809793.7
(22) Anmeldetag: 28.10.2022
(51) Int. Cl.: F16B 21/07, B64C 1/00, F16B 5/02, F16B 5/06

(54) **DEKOMPRESSIONSVERSCHLUSS**
DECOMPRESSION CONNECTOR
CONNECTEUR DE DÉCOMPRESSION

(30) Priorität: 28.10.2021 DE 202021105916 U
(43) Veröffentlichungstag der Anmeldung: 04.09.2024
(73) Patentinhaber: Schwarz GmbH, 75382 Althengstett (DE)
(72) Erfinder: HOMNER, Bernhard, 75365 Calw (DE)
(74) Vertreter: Puschmann Borchert Kaiser Klettner Patentanwälte Partnerschaft mbB
(86) Internationale Anmeldenummer: PCT/EP2022/080167
(87) Internationale Veröffentlichungsnummer: WO 2023/073153

(56) Entgegenhaltungen:
- EP-A1- 0 791 759
- EP-B1- 2 904 278
- US-A1- 2013 216 297

## Beschreibung

Die Erfindung betrifft einen Dekompressionsverschluss gemäß der im Oberbegriff des Schutzanspruches 1 angegebenen Art.

Dekompressionsverschlüsse haben die Aufgabe einen auftretenden Überdruck abzubauen, indem sie eine Verschlussplatte aus einer Verschlussstellung entlassen. Diese werden beispielsweise in der Luft- und Raumfahrttechnik eingesetzt.

Die EP 2 904 278 B1 offenbart einen gattungsgemäßen Verschlussbolzen aus zwei Bolzenelementen. Beide Bolzenelemente werden durch eine lösbare Klammer so drehfest miteinander verbunden, dass bei Vorliegen von bestimmten Druckverhältnissen, die auf die beiden Bolzenelemente aufgeschobene Klammer sich von zumindest einem Bolzenelement löst. Weiterhin ist ein Verschlusselement im zweiten Bolzenelement vorgesehen, das einem Befestigungselement, beispielsweise einer Mutter, zugeordnet ist. Die Verschluss- und Befestigungsfunktion wird dabei durch ein Zusammenwirken des Verschlussbolzens mit dem Befestigungselement erreicht. Die lösbare Verbindung der beiden Bolzenelemente ist durch die lösbare Klammer, die an beiden Enden in eine an beiden Bolzenelementen eingebrachte Nut eingreift, verwirklicht. Die Klammer kann nur vor dem Einbringen des Verschlussbolzens in eine vorgesehene Aufnahme für den Verschlussbolzens aufgeschoben werden. Des Weiteren kann der Verschlussbolzen nur einseitig im verbundenen Zustand der beiden Bolzenelemente in die Aufnahme eingebracht werden, weshalb es bei den zu verschließenden oder zu befestigenden Wandelementen beim Einführen zu dynamischen Abweichungen relativ zueinander führen kann.

Aus EP 2 410 189 B1 geht ein Dekompressionsverschluss hervor, der ebenfalls aus einem Verschlussbolzen mit zwei Bolzenelementen besteht, die durch eine zwischen dem ersten und zweiten Bolzenelement gelagerten Feder lösbar miteinander verbunden sind. Das erste Bolzenelement weist einen sich in radiale Richtung zur Längsachse des Bolzens erstreckenden zylindrischen Hohlraum auf, der das zweite Bolzenelement bereichsweise umfasst. Die Feder ist im ersten Bolzenelement innen zwischen der Seitenwand des zylindrischen Hohlraums des ersten Bolzenelements und der äußeren Umfangsfläche des zweiten Bolzenelements in radialer Richtung verspannt. Diese Ausführung eines Dekompressionsverschlusses benötigt jedoch für die eingesetzte Feder einen großen Hohlraum und somit ein raumgreifendes erstes Bolzenelement.

Beide beschriebenen Dekompressionsverschlüsse haben den Nachteil, dass zur Verbindung der beiden Bolzenelemente ein weiteres separates Bauteil notwendig ist, welches den damit einhergehenden Produktions- und Kostenaufwand erhöht. Zudem kann das Bauteil verloren gehen oder ist bei der Montage nicht unmittelbar greifbar, was den Montageaufwand erhöht.

Die US 2013/0216297 A1 offenbart eine Befestigungsvorrichtung zur Befestigung an einem kugelförmigen Bolzen, der an einem Werkstück angebracht ist. Die Vorrichtung besteht aus einer inneren und äußeren Hülse, die axial zueinander verschoben werden können. Die innere Hülse spreizt sich radial aus, während die äußere Hülse eine Verriegelungsvorrichtung enthält. Diese Verbindung kann mit einem Werkzeug gelöst werden

In der EP 0 791 759 A1 ist ein Schnellverschluss offenbart. Dieser verwendet elastische Spreizelemente, um Teile festzuhalten und sicher zu verankern.

Der Erfindung liegt die Aufgabe zugrunde, einen Dekompressionsverschluss gemäß der im Oberbegriff des Schutzanspruches 1 angegebenen Art derart weiterzubilden, dass unter Vermeidung der genannten Nachteile eine einfache Montage ermöglicht wird, ohne die Funktion des Dekompressionsverschlusses zu beeinträchtigen.

Diese Aufgabe wird durch die kennzeichnenden Merkmale des Anspruches 1 in Verbindung mit den Oberbegriffsmerkmalen gelöst.

Die Unteransprüche bilden vorteilhafte Weiterbildungen der Erfindung.

Der Erfindung liegt die Erkenntnis zu Grunde, dass durch eine bauliche Integration der Klammer in ein Bolzenelement der Produktionsaufwand sowie der Montageaufwand auf einfache Weise verringert werden kann.

In bekannter Art und Weise umfasst ein Dekompressionsverschluss mit einem Bolzen zumindest zwei separat ausgebildete Bolzenelemente. Ein erstes Bolzenelement weist einen Bolzenkopf und ein zweites Bolzenelement ein Verbindungsmittel auf. Die Bolzenelemente sind dabei drehfest miteinander und lösbar voneinander verbunden. Ein Klammerelement ist vorgesehen, das die lösbare Verbindung ermöglicht. Das Klammerelement ist fest und nicht lösbar mit einem der Bolzenelemente verbunden, insbesondere mit dem ersten Bolzenelement, und mit dem anderen Bolzenelement lösbar verbunden. Das Klammerelement weist zumindest einen Haltefinger auf, der sich vom Bolzenkopf entlang des ersten Bolzenelements erstreckt. Hierdurch kann eine platzsparende Konstruktion geschaffen werden. Das Klammerelement umfasst zwei Haltefinger, welche einander gegenüberliegend angeordnet sind.

Erfindungsgemäß ist der Dekompressionsverschluss so ausgebildet, dass das Klammerelement mit seinen zumindest beiden Haltefingern einen Einbringraum bereichsweise umgibt. Des Weiteren ist auf der dem Einbringraum zugewandten Seite konzentrisch zum Bolzenkopf ein Bolzenschaft vorgesehen. In diesen Bolzenschaft ist eine dem zweiten Bolzenelement zugeordnete konzentrische Bolzenaufnahme eingebracht. An dem der Bolzenaufnahme zugewandten Seite des zweiten Bolzenelements ist ein zur Bolzenaufnahme formkomplementärer Bolzenstempel angeordnet. Dabei ist der Bolzenstempel in die Bolzenaufnahme formschlüssig eingebracht. An den Bolzenstempel des zweiten Bolzenelements schließt sich ein konischer Einführbereich an, der in einen Schaft des zweiten Bolzenelements übergeht. Ein einfaches, geführtes Einbringen des Bolzenstempels in die Bolzenaufnahme zur Verbindung der beiden Bolzenelemente wird somit gewährleistet.

Insbesondere ist die für das Klammerelement vorgesehene Nut in den Schaft benachbart des Konus eingebracht.

Um eine drehfeste Verbindung zwischen beiden Bolzenelementen zu realisieren, wird die Form des Bolzenstempels und der formkomplementären Bolzenaufnahme entsprechend ausgebildet.

Gemäß einer Ausführungsform der Erfindung weist das zweite Bolzenelement eine Nut auf. In diese Nut greift der mit dem ersten Bolzenelement fest verbundene Haltefinger ein. Dadurch wird eine einseitig lösbare Verbindung der beiden Bolzenelemente gebildet. Die Verbindung wird dabei durch einfaches Zusammenführen der beiden Bolzenelemente mittels eines Einrastens des Haltefingers des Klammerelements in der Nut des zweiten Bolzenelements hergestellt.

Vorzugsweise sind das erste Bolzenelement und das Klammerelement materialeinheitlich realisiert. Dadurch werden nachteilige Effekte in Bezug auf die Belastbarkeit oder die Flexibilität beim Zusammenwirken unterschiedlicher Materialien vermieden.

Gemäß einer Ausführungsform der Erfindung wird das erste Bolzenelement mit dem Klammerelement als ein einziges Spritzgussteil ausgebildet. Durch dieses Spritzgussteil sind einheitliche Materialeigenschaften ohne die Festigkeit beeinträchtigende Verbindungsstellen von unterschiedlichen Werkstoffen für das erste Bolzenelements mit Klammerelement umgesetzt.

Bevorzugt sind das erste und zweite Bolzenelement aus einem gleichen Werkstoff ausgebildet, vorzugsweise aus rostfreiem Stahl. Die Bauteile könne beispielsweise dafür durch Metallpulverspritzgießen hergestellt werden. Durch dieses Herstellungsverfahren können die Fertigungstoleranzen sehr gut eingehalten werden.

Gemäß einer Ausführungsform der Erfindung, werden die beiden Bolzenelemente aus unterschiedlichen Werkstoffen realisiert. Hierdurch wird erreicht, dass für Anwendungen, bei denen geringere Anforderungen an Material und Haltekräfte gefordert werden, kostengünstigere Varianten hergestellt werden können.

Um eine größere Auflagefläche des Bolzenkopfs zu erreichen, ist zwischen dem freien Ende des ersten Bolzenelements und dem Bolzenkopf des ersten Bolzenelements eine Scheibe angeordnet.

Insbesondere wird die Scheibe vom Klammerelement und somit vom ersten Bolzenelement in axialer Richtung entlang der Längsachse des Bolzens durchgriffen.

Um die Scheibe gegen ungewollten Verlust zu sichern, aber auch um die Bewegung der Scheibe einzuschränken, ist das Klammerelement so ausgebildet, dass zumindest ein Haltemittel zwischen Bolzenkopf und Haltefinger des ersten Bolzenelements vorgesehen ist. Hierdurch wird die Scheibe in der benötigten horizontalen Ausrichtung bei der Montage gehalten.

Insbesondere ist dabei das Haltemittel als ein in radialer Richtung bezogen auf die Längserstreckung des Haltefingers sich erstreckender Vorsprung ausgebildet, bevorzugt auf der Außenseite des Haltefingers.

Vorzugsweise werden an dem Vorsprung Führungsschrägen angebracht, um ein einfaches Ein- und Ausbringen der Scheibe vom Klammerelement des ersten Bolzenelements zu ermöglichen.

Gemäß einer Ausführungsform der Erfindung ist das Klammerelement mit zwei Haltefingern versehen, welche einander gegenüberliegend im Bolzenelement angeordnet sind.

Bevorzugt ist das erste Bolzenelement mit dem Klammerelement zu einer Ebene durch die Längsachse des ersten Bolzenelements symmetrisch ausgebildet. Dadurch ist eine gleichmäßige Rückhaltefunktion des Klammerelements an dem zweiten Bolzenelement realisiert. Die auftretenden Kräfte werden gleichmäßig verteilt.

Insbesondere kann dabei die Form des Bolzenstempels und der formkomplementären Bolzenaufnahme mehreckig ausgebildet sein.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Explosionsansicht des Dekompressionsverschlusses, umfassend ein erstes Bolzenelement, ein zweites Bolzenelement und eine Scheibe;
- Fig. 2: eine Detailansicht im Längsschnitt des ersten Bolzenelements mit eingebrachtem zweiten Bolzenelement und einer Scheibe, und
- Fig. 3: eine Schnittansicht des Dekompressionsverschlusses mit zwei Bauteilen und Verschlussmitteln.

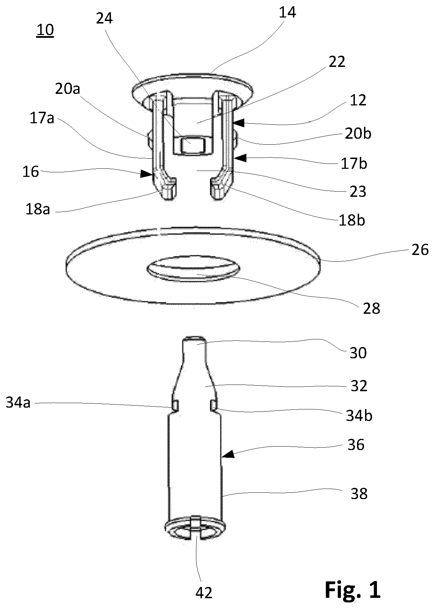

Fig. 1 bis Fig. 3 zeigen jeweils einen Dekompressionsverschluss 10 mit einem Bolzen und einer Scheibe 28. Der Bolzen umfasst zwei Bolzenelemente 12, 36, wobei das erste Bolzenelement 12 ein Klammerelement 16 aufweist.

Das Klammerelement 16 ist einseitig fest mit dem ersten Bolzenelement 12 verbunden, nämlich materialeinheitlich einstückig ausgebildet. Am freien Ende des Klammerelements 16 ist ein Haltefinger 18a, 18b angebracht. Das Klammerelement 16 ist elastisch verformbar und wirkt als ein Federelement. An dem dem freien Ende der Haltefinger 18a, 18b entfernt gelegenen Ende weist das erste Bolzenelement 12 einen Bolzenkopf 14 mit einer ersten Angriffsstruktur 42 für ein Werkzeug zum Aufbringen eines Drehmoments auf. In axialer Richtung entlang der Einbringrichtung 19 ist auf dem Klammerelement 16 zwischen dem Bolzenkopf 14 und dem Haltefinger 18a, 18b ein in radialer Richtung zur Einbringrichtung 19 orientierter Haltevorsprung 20a, 20b auf der Außenseite angeordnet.

Gemäß einer Ausführungsform kann das erste Bolzenelement 12 mit dem Klammerelement 16 als ein einziges Spritzgussteil ausgebildet sein. Das erste Bolzenelement 12 und das Klammerelement 16 bestehen dabei aus dem gleichen Werkstoff.

Der Fig. 1 bis 3 ist zu entnehmen, dass das Klammerelement 16 zwei zur Längsachse 46 des Bolzens symmetrische, elastisch verformbare Klammerschenkel 17a, 17b mit den elastisch verformbaren Haltefingern 18a, 18b und auf der Außenseite der Klammerschenkel 17a, 17b angeordnete Haltevorsprüngen 20a, 20b aufweist. Die Haltevorsprünge 20a, 20b weisen dabei zur einfacheren Montage Einführschrägen 50a, 50b und Ausführschrägen 52a, 52b auf. Des Weiteren sind die Haltefinger 18a, 18b auch mit Einführschrägen 48a, 48b versehen.

Auf der dem zweiten Bolzenelement 36 zugewandten Seite weist das erste Bolzenelement 12 einen konzentrisch ausgebildeten ersten Bolzenschaft 22 mit einer konzentrisch in den Bolzenschaft 22 eingebrachten Bolzenaufnahme 24 auf. Der erste Bolzenschaft 22 befindet sich dabei in dem vom Klammerelement 16 in radialer Richtung zur Einbringrichtung 19 begrenzten Einbringraum 23.

Das zweite Bolzenelement 36 schließt auf der dem ersten Bolzenelement 12 zugewandten Seite mit einem Bolzenstempel 30 ab. Vom Bolzenstempel 30 in axialer Richtung entlang der Einbringrichtung 19 ist das zweite Bolzenelement 36 konisch als ein Einbringkonus 32 ausgebildet. An den Einbringkonus 32 schließt sich in axialer Richtung ein zylindrischer zweiten Bolzenschaft 38 an. Im Übergangsbereich des Einbringkonus 32 zum zweiten Bolzenschaft 38 sind zwei symmetrisch eingebrachte Haltenute 34a; 34b in das zweite Bolzenelement 36 vorgesehen.

Die formkomplementäre Ausführung des Bolzenstempels 30 und der Bolzenaufnahme 24 ist mehreckig ausgebildet, nämlich viereckig.

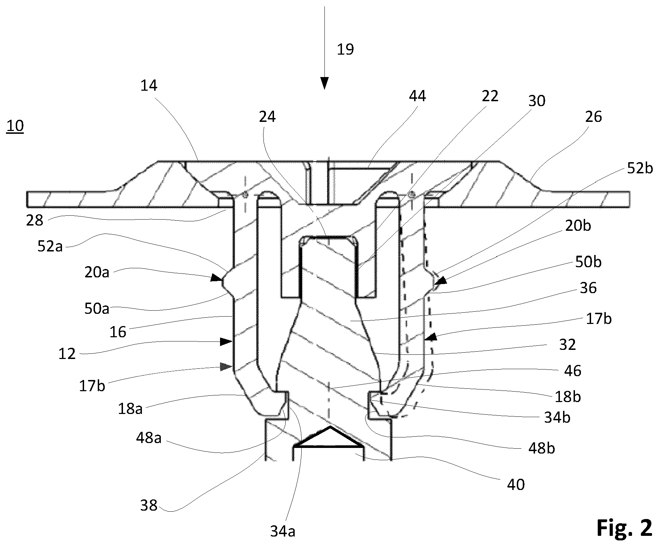

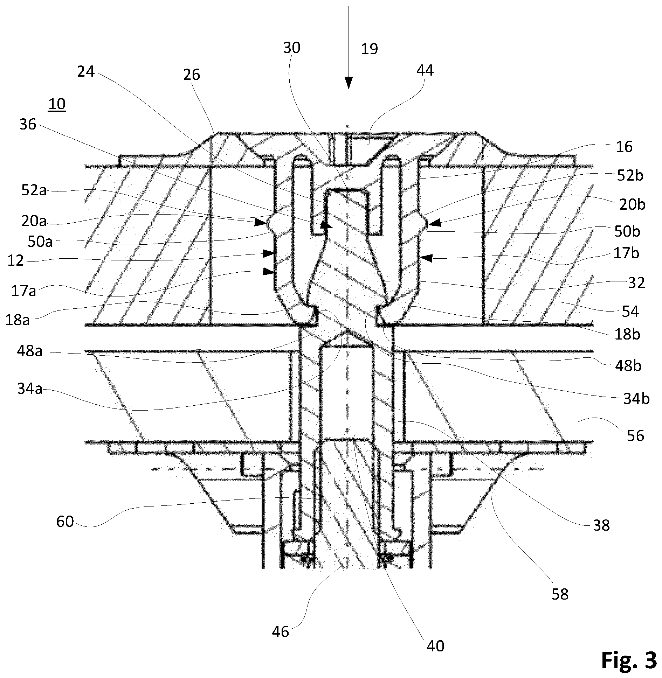

Fig. 1 zeigt, dass am freien Ende des zweiten Bolzenelements 36 eine Verschlussaufnahme 40 vorgesehen ist. Nach Fig. 2 und Fig. 3 ist die Verschlussaufnahme 40 konzentrisch in das zweite Bolzenelement 36 in axialer Richtung entgegen der Einbringrichtung 19 eingearbeitet und reicht in dem zweiten Bolzenelement bis kurz vor der axialen Position der Haltenute 34a, 34b. Die Verschlussaufnahme 40 wird durch ein Gewinde gebildet. Am freien Ende des zweiten Bolzenelements 36 ist eine Angriffsstruktur 44 für ein Werkzeug zum Aufbringen eines Drehmoments eingebracht.

Die Verschlussfunktion wird durch ein Einbringen eines Verschlusselements 60, beispielsweise einer Schraube und dessen Zusammenwirken mit einem Verschlussmittel 58, wie in Fig. 3 dargestellt, realisiert.

In Fig. 2 und 3 ist zu erkennen, dass der Bolzen im verbundenen Zustand durch eine Scheibenöffnung 28 einer Scheibe 26 eingebracht ist. Die Scheibe 26 dient hierbei zur Vergrößerung der Auflagefläche des Bolzenkopfs 14. Der Bolzenkopf 14 und die Scheibe 26 sind aneinander angepasst, so dass sich im Bereich des Bolzenkopfs 14 an der Außenseite eine ebene Fläche ergibt. Der verbundene Zustand der beiden Bolzenelemente 12, 36 zeichnet sich dadurch aus, dass der Bolzenstempel 30 in die Bolzenaufnahme 24 eingebracht ist und die Haltefinger 48a, 48b in die Haltenute 34a, 34b eingreifen. Im verbundenen Zustand sind die beiden Bolzenelemente 12, 36 durch die Gestaltung des Bolzenstempels 30 und der Bolzenaufnahme 24 drehfest miteinander verbunden. Die axiale Beweglichkeit der Scheibe 26 zum Bolzen ist in Einbringrichtung 19 durch die Haltevorsprünge 20a, 20b und entgegen der Einbringrichtung 19 durch den Bolzenkopf 14 begrenzt. Ein Ein- und Ausführen der Scheibe 26 von dem ersten Bolzenelement 12 ist durch an den Haltevorsprüngen 20a, 20b angebrachte Einführschrägen 50a, 50b und Ausführschrägen 52a, 52b und die elastische Verformbarkeit des Klammerelements 16 einfach möglich. Der Bolzenkopf 14 lässt sich komplett in der Scheibe 26 versenken.

Fig. 2 zeigt die elastische Verformbarkeit des Klammerelements 16 durch die gestrichelte Line am zweiten Klammerschenkel 17b und zweiten Haltefinger 18b. Durch die elastische Verformbarkeit lässt sich der verbundene Zustand der beiden Bolzenelemente 12, 36 herstellen und im Falle bestimmter Druckverhältnisse oder bei einem Ausbau durch nach außen Schwenken der Klammerschenkel 17a, 17b und Haltefinger 18a, 18b lösen. Ein Verbinden der beiden Bolzenelemente 12, 36 wird durch ein Zusammenführen der beiden Bolzenelemente 12, 36 in axialer Richtung zur Einbringrichtung 19 realisiert. Dabei werden die Klammerschenkel, 17a, 17b und die Haltefinger 18a, 18b durch den Einbringkonus 32 in eine radiale Richtung zur Einbringrichtung 19 verformt, um ein Einbringen des zweiten Bolzenelements 36 in den Einbringraum 23 zu ermöglichen. Die Haltefinger 18a, 18b rasten dann, bei weiterer axialer Bewegung des zweiten Bolzenelements 36 in den Einbringraum 23 in den Haltenuten 34a, 34b ein. Gleichzeitig ist der Bolzenstempel 30 in die Bolzenaufnahme 24 formschlüssig eingebracht. Das Einbringen des zweiten Bolzenelements 36 in den Einbringraum 23 wird durch die Einführschrägen 48a, 48b der Haltefinger 18a, 18b zusätzlich vereinfacht. Durch die Angriffsstrukturen 42, 44 für ein Drehmoment des ersten und zweiten Bolzenelements 12, 36 wird eine Ausrichtungsfunktion der Bolzenaufnahme 24 relativ zum Bolzenstempel 30 und der Haltenute 34a, 34b relativ zu den Haltefingern 18a, 18b in Umfangsrichtung des Bolzens umgesetzt.

Durch eine Kraft in axialer Richtung entlang der Einbringrichtung 19, beispielsweise durch bestimmte Druckverhältnisse in einem Flugzeug, löst die Verbindung der beiden Bolzenelemente 12, 36 aus Haltefingern 18a, 18b und Haltenute 34a, 34b einseitig. Damit einhergehend wird der Bolzenstempel 30 aus der Bolzenaufnahme 24 ausgeführt. Die Scheibe 26, in die das erste Bolzenelement 12 eingebracht ist, wird hierbei weiterhin durch die Haltevorsprünge 20a, 20b in axialer Richtung in Einbringrichtung 19 zwischen Bolzenkopf 14 und Haltevorsprüngen 20a, 20b gesichert.

In Fig. 3 ist eine Anwendung des Dekompressionsverschlusses 10 zur lösbaren Verbindung von Bauteil 54 und Bauteil 56 gezeigt. Es ist ein unverschlossener Zustand dargestellt, der durch eine Luftschicht zwischen Bauteil 54 und Bauteil 56 und einen nicht vollständig in die Verschlussaufnahme 40 eingebrachtes Verschlusselement 60 gekennzeichnet ist.

### Bezugszeichenliste

- 10: Dekompressionsverschluss
- 12: erstes Bolzenelement
- 14: Bolzenkopf
- 16: Klammerelement
- 17a: erster Klammerschenkel
- 17b: zweiter Klammerschenkel
- 18a: erster Haltefinger
- 18b: zweiter Haltefinger
- 19: Einbringrichtung
- 20a: erster Haltevorsprung
- 20b: zweiter Haltevorsprung
- 22: erster Bolzenschaft
- 23: Einbringraum
- 24: Bolzenaufnahme
- 26: Scheibe
- 28: Scheibenöffnung
- 30: Bolzenstempel
- 32: Einbringkonus
- 34a: erste Haltenut
- 34b: zweite Haltenut
- 36: zweites Bolzenelement
- 38: zweiter Bolzenschaft
- 40: Verschlussaufnahme
- 42: Angriffsstruktur für ein Drehmoment des zweiten Bolzenelements 36
- 44: Angriffsstruktur für ein Drehmoment des ersten Bolzenelements 12
- 46: Längsachse
- 48a: Einführungsschräge des ersten Haltefingers 18a
- 48b: Einführungsschräge des zweiten Haltefingers 18b
- 50a: Einführungsschräge des ersten Haltevorsprungs 20a
- 50b: Einführungsschräge des zweiten Haltevorsprungs 20b
- 52a: Ausführungsschräge des ersten Haltevorsprungs 20a
- 52b: Ausführungsschräge des zweiten Haltevorsprungs 20a
- 54: Bauteil
- 56: Bauteil
- 58: Verschlussmittel
- 60: Verschlusselement

## Patentansprüche

1. Dekompressionsverschluss (10) mit einem Bolzen, der zumindest zwei separat ausgebildete Bolzenelemente (12, 36) umfasst, wobei ein erstes Bolzenelement (12) einen Bolzenkopf (14) und ein zweites Bolzenelement (36) ein Verbindungsmittel aufweist, die Bolzenelemente (12, 36) drehfest miteinander und lösbar voneinander verbunden sind, und ein Klammerelement (16) vorgesehen ist, das die lösbare Verbindung ermöglicht, wobei das Klammerelement (16) fest und nicht lösbar mit einem der Bolzenelemente (12, 36) verbunden ist, insbesondere mit dem ersten Bolzenelement (12), und mit dem anderen Bolzenelement (12, 36) lösbar verbunden ist, wobei das Klammerelement (16) zumindest einen Haltefinger (18a, 18b) aufweist, der sich vom Bolzenkopf (14) entlang des ersten Bolzenelements (12) erstreckt, wobei das Klammerelement (16) zwei Haltefinger (18a, 18b) umfasst, welche einander gegenüberliegend angeordnet sind, **dadurch gekennzeichnet, dass** das Klammerelement (16) mit seinen zumindest beiden Haltefingern (18a, 18b) einen Einbringraum (23) begrenzt, dass das erste Bolzenelement (12) neben dem Bolzenkopf (14) einen konzentrisch zum Bolzenkopf (14) angeordneten Bolzenschaft (22) aufweist, dass auf der dem zweiten Bolzenelement (36) zugewandten Seite des Bolzenschaftes (22) eine konzentrische Bolzenaufnahme (24) im Bolzenschaft (22) vorgesehen ist, dass das zweite Bolzenelement (36) an der dem Bolzenschaft (22) zugewandten Seite einen zur Bolzenaufnahme (24) formkomplementären Bolzenstempel (30) aufweist, dass der Bolzenstempel (30) in der Bolzenaufnahme (24) angeordnet ist, und dass sich an den Bolzenstempel (30) ein konischer Einführbereich (32) anschließt, der sich bis zu einem Schaft (38) des zweiten Bolzenelements (36) erstreckt.

2. Dekompressionsverschluss nach Anspruch 1, **dadurch gekennzeichnet, dass** das freie Ende des Haltefingers (18a, 18b) in das zweite Bolzenelement (36) eingreift.

3. Dekompressionsverschluss nach Anspruch 2, **dadurch gekennzeichnet, dass** das zweite Bolzenelement (36) eine Nut (34a, 34b) aufweist, in welche das freie Ende des Haltefingers (18a, 18b) eingreift.

4. Dekompressionsverschluss nach einem der vorangehenden Ansprüche, **dadurch gekennzeichnet, dass** das Klammerelement (16) und das erste Bolzenelement (12) materialeinheitlich ausgebildet sind.

5. Dekompressionsverschluss nach Anspruch 4, **dadurch gekennzeichnet, dass** das Klammerelement (16) und das erste Bolzenelement (12) zusammen als ein Spritzgussteil, insbesondere als ein Metallpulverspritzgussteil, ausgebildet sind.

6. Dekompressionsverschluss nach einem der vorangehenden Ansprüche, **dadurch gekennzeichnet, dass** das erste und das zweite Bolzenelement (12, 36) aus dem gleichen Werkstoff ausgebildet sind, insbesondere aus rostfreiem Stahl bestehen.

7. Dekompressionsverschluss nach einem der Ansprüche 1 bis 5, **dadurch gekennzeichnet, dass** das erste und das zweite Bolzenelement (12, 36) aus unterschiedlichen Werkstoffen ausgebildet sind.

8. Dekompressionsverschluss nach einem der vorangehenden Ansprüche, **dadurch gekennzeichnet, dass** zur Vergrößerung der Auflagefläche des Bolzenkopfs (14) eine Scheibe (26) vorgesehen ist, die zwischen Bolzenkopf (14) und einem freien Ende des Bolzens angeordnet ist.

9. Dekompressionsverschluss nach Anspruch 8, **dadurch gekennzeichnet, dass** das Klammerelement (16) die Scheibe (26) in axialer Richtung durchgreift.

10. Dekompressionsverschluss nach Anspruch 8 oder 9, **dadurch gekennzeichnet, dass** die auf das Klammerelement (16) aufgebrachte Scheibe (26) durch zumindest ein auf dem Klammerelement (16) vorgesehenes Haltemittel zwischen Bolzenkopf (14) und Haltefinger (18a, 18b) gesichert ist.

11. Dekompressionsverschluss nach Anspruch 10, **dadurch gekennzeichnet, dass** das Haltemittel als ein in radialer Richtung bezogen auf die Längserstreckung des Haltefingers (18a, 18b) sich erstreckender Vorsprung (20a, 20b) ausgebildet ist, insbesondere auf der Außenseite des Haltefingers (18a, 18b).

12. Dekompressionsverschluss nach Anspruch 11, **dadurch gekennzeichnet, dass** der Vorsprung (20a, 20b) Führungsschrägen (50a, 50b, 52a, 52b) für die Scheibe (26) aufweist.

13. Dekompressionsverschluss nach einem der vorangehenden Ansprüche, **dadurch gekennzeichnet, dass** die Einheit aus erstem Bolzenelement (12) und Klammerelement (16) symmetrisch entlang einer Ebene durch die Längsachse (46) des Bolzens ausgebildet ist.

14. Dekompressionsverschluss nach einem der vorangehenden Ansprüche , **dadurch gekennzeichnet, dass** das zweite Bolzenelement (36) im Schaft (38) benachbart dem Konus (32) die Nut (34a, 34b) aufweist.

15. Dekompressionsverschluss nach einem der vorangehenden Ansprüche, **dadurch gekennzeichnet, dass** die Form der Bolzenaufnahme (24) zusammen mit der Form des Bolzenstempels (30) eine Drehfestigkeit um die Längsachse (46) der Bolzenelemente (12, 36) gewährleistet.

16. Dekompressionsverschluss nach Anspruch 15, **dadurch gekennzeichnet, dass** der Bolzenstempel (30) und die Bolzenaufnahme (24) im Querschnitt mehreckig ausgebildet sind.

## Claims

1. Decompression lock (10) having a bolt which comprises at least two separately formed bolt elements (12, 36), wherein a first bolt element (12) has a bolt head (14) and a second bolt element (36) has a connecting means, which bolt elements (12, 36) are connected to one another in a rotationally fixed manner such that they can be detached from one another, and a clamp element (16) is provided, which enables the detachable connection, which clamp element (16) is connected securely and non-detachably to one of the bolt elements (12, 36), in particular to the first bolt element (12), and is detachably connected to the other bolt element (12, 36), which clamp element (16) has at least one retaining finger (18a, 18b) that extends away from the bolt head (14) along the first bolt element (12), which clamp element (16) comprises two retaining fingers (18a, 18b) which are arranged opposite one another, **characterized in that** the clamp element (16) delimits an insertion space (23) with its at least two retaining fingers (18a, 18b), **in that** the first bolt element (12) has, in addition to the bolt head (14), a bolt shaft (22) arranged concentrically with respect to the bolt head (14), **in that** a concentric bolt receptacle (24) is provided in the bolt shaft (22) on the side of the bolt shaft (22) facing the second bolt element (36), **in that** the second bolt element (36) has, on its side facing the bolt shaft (22), a bolt plunger (30) which is complementary in shape to the bolt receptacle (24), **in that** the bolt plunger (30) is arranged in the bolt receptacle (24), and **in that** the bolt plunger (30) is adjoined by a conical insertion region (32) which extends as far as a shaft (38) of the second bolt element (36).

2. Decompression lock according to claim 1, **characterized in that** the free end of the retaining finger (18a, 18b) engages in the second bolt element (36).

3. Decompression lock according to claim 2, **characterized in that** the second bolt element (36) has a groove (34a, 34b) in which the free end of the retaining finger (18a, 18b) engages.

4. Decompression lock according to any one of the preceding claims, **characterized in that** the clamp element (16) and the first bolt element (12) are formed from the same material.

5. Decompression lock according to claim 4, **characterized in that** the clamp element (16) and the first bolt element (12) together form a single injection-molded part, in particular a metal powder injection-molded part.

6. Decompression lock according to any one of the preceding claims, **characterized in that** the first and second bolt elements (12, 36) are made from the same material, in particular stainless steel.

7. Decompression lock according to any one of claims 1 to 5, **characterized in that** the first and second bolt elements (12, 36) are made from different materials.

8. Decompression lock according to any one of the preceding claims, **characterized in that** a washer (26) is provided for enlarging the bearing surface of the bolt head (14), which washer is arranged between the bolt head (14) and a free end of the bolt.

9. Decompression lock according to claim 8, **characterized in that** the clamp element (16) engages through the washer (26) in the axial direction.

10. Decompression lock according to any one of claims 8 or 9 above, **characterized in that** the washer (26) mounted on the clamp element (16) is secured in its position between the bolt head (14) and the retaining finger (18a, 18b) by at least one retaining means provided on the clamp element (16).

11. Decompression lock according to claim 10, **characterized in that** the retaining means is designed as a projection (20a, 20b) that extends in the radial direction with respect to the longitudinal extent of the retaining finger (18a, 18b), in particular on the outside of the retaining finger (18a, 18b).

12. Decompression lock according to claim 11, **characterized in that** the projection (20a, 20b) has guide slopes (50a, 50b, 52a, 52b) for the washer (26).

13. Decompression lock according to any one of the preceding claims, **characterized in that** the unit constituted by the first bolt element (12) and the clamp element (16) is formed symmetrically along a plane through the longitudinal axis (46) of the bolt.

14. Decompression lock according to any one of the preceding claims, **characterized in that** the second bolt element (36) has the groove (34a, 34b) in the shaft (38) adjacent to the cone (32).

15. Decompression lock according to any one of the preceding claims, **characterized in that** the shape of the bolt receptacle (24) and the shape of the bolt plunger (30) together act to ensure torsional strength about the longitudinal axis (46) of the bolt elements (12, 36).

16. Decompression lock according to claim 15, **characterized in that** the bolt plunger (30) and the bolt receptacle (24) are polygonal in cross-section.

## Revendications

1. Fermeture de décompression (10) avec un boulon qui comprend au moins deux éléments de boulon (12, 36) réalisés séparément, dans laquelle un premier élément de boulon (12) comporte une tête de boulon (14) et un deuxième élément de boulon comporte (36) un moyen de liaison, les éléments de boulon (12, 36) sont reliés entre eux de manière solidaire en rotation et de manière détachable l'un de l'autre, et un élément d'attache (16) est prévu, qui permet la liaison libérable, dans laquelle l'élément d'attache (16) est relié fixement et de manière non détachable à l'un des éléments de boulon (12, 36), en particulier au premier élément de boulon (12), et est relié de manière détachable à l'autre élément de boulon (12, 36), dans laquelle l'élément d'attache (16) présente au moins un doigt de retenue (18a, 18b), qui s'étend à partir de la tête de boulon (14) le long du premier élément de boulon (12), dans laquelle l'élément d'attache (16) comprend deux doigts de retenue (18a, 18b), lesquels sont disposés en vis-à-vis, **caractérisée en ce que** l'élément d'attache (16) délimite avec ses au moins deux doigts de retenue (18a, 18b) un espace d'introduction (23), que le premier élément de boulon (12) présente en plus de la tête de boulon (14) une tige de boulon (22) disposée de manière concentrique par rapport à la tête de boulon (14), qu'un logement de boulon (24) concentrique est prévu dans la tige de boulon (22) sur la face de la tige de boulon (22) tournée vers le deuxième élément de boulon (36), que le deuxième élément de boulon (36) présente sur la face tournée vers la tige de boulon (22) un piston de boulon (30) en complémentarité de forme par rapport au logement de boulon (24), que le piston de boulon (30) est disposé dans le logement de boulon (24), et qu'une zone d'introduction (32) conique, qui s'étend jusqu'à une tige (38) du deuxième élément de boulon (36), se raccorde au piston de boulon (30).

2. Fermeture de décompression selon la revendication 1, **caractérisée en ce que** l'extrémité libre du doigt de retenue (18a, 18b) s'insère dans le deuxième élément de boulon (36).

3. Fermeture de décompression selon la revendication 2, **caractérisée en ce que** le deuxième élément de boulon (36) présente une rainure (34a, 34b) dans laquelle s'insère l'extrémité libre du doigt de retenue (18a, 18b).

4. Fermeture de décompression selon l'une quelconque des revendications précédentes, **caractérisée en ce que** l'élément d'attache (16) et le premier élément de boulon (12) sont réalisés avec homogénéité de matériau.

5. Fermeture de décompression selon la revendication 4, **caractérisée en ce que** l'élément d'attache (16) et le premier élément de boulon (12) sont réalisés conjointement sous la forme d'une pièce moulée par injection, en particulier sous la forme d'une pièce moulée par injection de poudre métallique.

6. Fermeture de décompression selon l'une quelconque des revendications précédentes, **caractérisée en ce que** le premier et le deuxième élément de boulon (12, 36) sont réalisés à partir du même matériau, en particulier sont constitués d'acier inoxydable.

7. Fermeture de décompression selon l'une quelconque des revendications 1 à 5, **caractérisée en ce que** le premier et le deuxième élément de boulon (12, 36) sont réalisés à partir de différents matériaux.

8. Fermeture de décompression selon l'une quelconque des revendications précédentes, **caractérisée en ce que** pour l'augmentation de la surface d'appui de la tête de boulon (14) un disque (26) est prévu, qui est disposé entre la tête de boulon (14) et une extrémité libre du boulon.

9. Fermeture de décompression selon la revendication 8, **caractérisée en ce que** l'élément d'attache (16) traverse le disque (26) dans la direction axiale.

10. Fermeture de décompression selon la revendication 8 ou 9, **caractérisée en ce que** le disque (26) appliqué sur l'élément d'attache (16) est bloqué entre la tête de boulon (14) et le doigt de retenue (18a, 18b) par au moins un moyen de retenue prévu sur l'élément d'attache (16).

11. Fermeture de décompression selon la revendication 10, **caractérisée en ce que** le moyen de retenue est réalisé sous la forme d'une saillie (20a, 20b) s'étendant dans la direction radiale par rapport à l'étendue longitudinale du doigt de retenue (18a, 18b), en particulier sur la face extérieure du doigt de retenue (18a, 18b).

12. Fermeture de décompression selon la revendication 11, **caractérisée en ce que** la saillie (20a, 20b) présente des chanfreins de guidage (50a, 50b, 52a, 52b) pour le disque (26).

13. Fermeture de décompression selon l'une quelconque des revendications précédentes, **caractérisée en ce que** l'unité composée du premier élément de boulon (12) et de l'élément d'attache (16) est réalisée symétriquement le long d'un plan à travers l'axe longitudinal (46) du boulon.

14. Fermeture de décompression selon l'une quelconque des revendications précédentes, **caractérisée en ce que** le deuxième élément de boulon (36) présente la rainure (34a, 34b) dans la tige (38) adjacente au cône (32).

15. Fermeture de décompression selon l'une quelconque des revendications précédentes, **caractérisée en ce que** la forme du logement de boulon (24) conjointement avec la forme du piston de boulon (30) garantit une solidarité en rotation autour de l'axe longitudinal (46) des éléments de boulon (12, 36).

16. Fermeture de décompression selon la revendication 15, **caractérisée en ce que** le piston de boulon (30) et le logement de boulon (24) sont réalisés de manière polygonale en section transversale.
